# EUROPÄISCHE PATENTSCHRIFT

(11) **EP 3 231 904 B1**
(45) Veröffentlichungstag und Bekanntmachung des Hinweises auf die Patenterteilung: **08.09.2021**
(21) Anmeldenummer: 16165311.8
(22) Anmeldetag: 14.04.2016
(51) Int. Cl.: D01H 7/52

(54) **AUFSPUL- UND DRALLEINRICHTUNG EINER RINGSPINN- ODER RINGZWIRNMASCHINE SOWIE RINGSPINN- UND RINGZWIRNVERFAHREN**
SPOOLING AND SPINNER DEVICE OF A RING SPINNING FRAME OR RING TWISTING FRAME, AND RING SPINNING AND RING TWISTING METHOD
DISPOSITIF D'EMBOBINAGE ET DE TORSION D'UN METIER CONTINU A FILER OU UN METIER A FILER A ANNEAUX ET PROCEDE DE FILAGE A ANNEAUX ET A RETORDRE A ANNEAUX

(43) Veröffentlichungstag der Anmeldung: 18.10.2017
(73) Patentinhaber: Sanko Tekstil Isletmeleri San.ve Tic.A.S. Baspinar Subesi, 27620 Gaziantep (TR)
(72) Erfinder: de Haas, Oliver, 01259 Dresden (DE); Kühn, Lars, 01187 Dresden (DE)
(74) Vertreter: Grünecker Patent- und Rechtsanwälte PartG mbB

(56) Entgegenhaltungen:
- WO-A2-2012/100964
- CH-A- 396 714
- DE-B1- 1 510 943
- FR-A- 1 399 710
- JP-A- H01 156 524
- US-A- 5 109 659

## Beschreibung

### Gebiet der Erfindung

Die Erfindung betrifft eine Vorrichtung zum Herstellen und Aufwickeln von Garnen in Ringspinn- und Ringzwirnmaschinen, wobei das Garn von einem Drallelement in Drehung versetzt und aufgrund einer sich einstellenden Geschwindigkeitsdifferenz zu Spindel und Kops auf den Kops aufgewickelt wird.

### Stand der Technik

Konventionelle Ringspinn- und Ringzwirnmaschinen sind mit einem Ring-Läufer-System zur Drehungserteilung des Fadens ausgestattet. Infolge der Drehung der Spindel wird der Läufer, in den der Faden eingehängt ist, und welcher auf dem Ring beweglich befestigt ist, in Drehung versetzt. Der Läufer, der beispielsweise als einfache Drahtschlaufe ausgeführt sein kann, hat dabei keinen eigenen Antrieb, sondern wird durch das in ihn eingehängte Garn von der Spindel mitgenommen. Durch die hohe Reibung des Läufers am Ring, durch den Luftwiderstand des Rings sowie den Luftwiderstand des Fadenballons zwischen Fadenführungsöse und Läufer bleibt der Läufer hinter der Drehzahl der Spindel zurück, was zu einem Aufwickeln des Fadens auf den Kops führt.

Bei der Bewegung des Läufers auf dem Ring kommt es infolge der auftretenden Fliehkraft zur Reibung zwischen Ring und Läufer. Weil es bei der kleinen Masse des Läufers nicht möglich ist, die entstehende Wärme effektiv abzuleiten, resultiert daraus eine Geschwindigkeitsbegrenzung des Läufers. Wird die Geschwindigkeit des Läufers weiter erhöht, so wird die Erwärmung des Läufers so groß, dass dieser durchglüht und bricht. Zusätzlich führt dies zur Verschmelzung von thermoplastischen Fasermaterialien und zur Erweichung von honigtauhaltigen Baumwollen.

Die Produktivitätsbegrenzung des Ringspinnverfahrens liegt maßgeblich beim Ring-Läufer-System und ist abhängig von Ring, Läufer und Garn. Eine Produktivitätserhöhung bedeutet eine Drehzahlerhöhung der Spindel, wodurch allerdings beim Überschreiten der Grenzen an den derzeitig zur Verfügung stehenden Ringen und Läufern der Verschleiß stark steigt.

Die Begrenzung der Geschwindigkeit des Läufers bedeutet, dass die Liefergeschwindigkeit des Fadens nicht weiter erhöht werden kann, so dass das bestehende Ring-Läufer-System die Leistungsfähigkeit von Ringspinn- und Ringzwirnmaschinen begrenzt.

Aus der WO 2012/100964 der Anmelderin ist eine Aufspul- und Dralleinrichtung einer Ringspinn- oder Ringzwirnmaschine bekannt, bei der die Reibung zwischen Ring und Läufer durch magnetische Levitation eliminiert wird, was die Lebensdauer maßgeblich verlängert sowie die einwirkenden Kräfte reduziert. Ein ringförmiger Stator mit einem supraleitenden Material und einer Statorkühleinrichtung wird ebenso wie ein ringförmiger, relativ zum Stator drehbarer, magnetfelderzeugender Rotor mit einem ösenförmigen Garnführungselement koaxial zum Kops angeordnet. Bei Abkühlung des supraleitenden Materials des Stators unter die Sprungtemperatur wird der in den Stator eingedrungene magnetische Fluss des Rotors eingefroren, so dass eine eigenstabile, passive Lagerung des anfänglich mechanisch gehaltenen Rotors durch magnetische Levitation erzielt werden kann. Aufgrund der berührungslosen Lagerung des sich drehenden Rotors entfällt der Ring des klassischen Ring-Läufer-Systems als maßgeblich produktivitätsbegrenzendes, da Reibungswärme erzeugendes, Bauteil. Stattdessen wird nun der gesamte Rotor mit dem Garnführungselement in schnelle Rotation versetzt, die, abgesehen von einer geringen magnetischen Reibung, im Wesentlichen reibungsfrei erfolgt und somit deutlich höhere Spindeldrehzahlen gestattet.

In der Aufspul- und Dralleinrichtung aus der CH 396 714 A gleitet, innerhalb einer Luftspalte, ein Garn über ein ringförmiger Dauermagnet, der drehbar gegenüber eines Spindels gelagert ist.

In der Aufspul- und Dralleinrichtung aus der FR 1 399 710 A gleitet ein Garn zwischen einem drehfest ringförmigen Magnet und einer Kranbahn, wobei sich diese beide Elemente pünktlich berühren.

Der als Magnetring ausgebildete Rotor hat jedoch ein erhebliches Eigengewicht, welches beim Anfahren der Spindel mit beschleunigt werden muss. Zudem kann der frei schwebende Magnetring nicht eingehaust werden, so dass der mit hohen Drehzahlen von ca. 20000 bis 30000 Umdrehungen pro Minute rotierende Magnetring ein Sicherheitsrisiko für einen Bediener der Anlage darstellt. Schließlich stellt das an dem Magnetring angebrachte Garnführungselement eine Unwucht dar, die umso problematischer wird, je weiter die Drehzahl der Spindel gesteigert wird. Der vorliegenden Erfindung liegt somit die Aufgabe zugrunde, eine Vorrichtung zum Verdrillen von Fasermaterial und Aufspulen des entstehenden Garns oder Zwirns in Ringspinn- und Ringzwirnmaschinen zu schaffen, welche bei hoher Leistungsfähigkeit ein schnelles Anfahren und Runterfahren der Maschine erlaubt und zudem die Sicherheit des Bedienpersonals verbessert. Ganz allgemein liegt der vorliegenden Erfindung die Aufgabe zugrunde, die Produktivität von Ringspinn- und Ringzwirnmaschinen weiter zu steigern.

### Beschreibung der Erfindung

Die oben genannten Aufgaben werden durch eine Aufspul- und Dralleinrichtung für Ringspinn- und Ringzwirnmaschinen mit den Merkmalen des unabhängigen Anspruchs 1 und ein Verfahren mit den Merkmalen des unabhängigen Anspruchs 11 gelöst. In den abhängigen Patentansprüchen sind vorteilhafte Ausgestaltungen und Weiterbildungen beschrieben.

Erfindungsgemäß umfasst die Aufspul- und Dralleinrichtung einer Ringspinn- oder Ringzwirnmaschine mindestens einen Stator, der mindestens ein supraleitendes Material und eine Statorkühlung umfasst, mindestens einen magnetfelderzeugenden Rotor und eine drehbare Spindel, wobei der Rotor und der Stator koaxial zur Spindel angeordnet sind, und der Rotor und der Stator derart ausgebildet sind, dass zwischen dem Rotor und dem Stator ein ringförmiger, koaxial zur Spindel angeordneter Luftspalt gebildet wird, in dem der aufzuwickelnde Faden umlaufen kann.

Der gebildete Luftspalt ist ringförmig ausgebildet, wobei seine Lage und Ausdehnung im Betrieb der Einrichtung derart gestaltet sind, dass der aufzuwickelnde Faden am unteren Ende des Fadenballons durch den Luftspalt auf den rotierenden Kops aufgewickelt wird. Beispielsweise kann der Luftspalt eine Breite von 2 bis 3 mm aufweisen. Durch die Rotation der Spindel und der darauf aufgesteckten Hülse mit dem Kops wird der Faden wie bekannt im Umlauf mitgenommen. Da der Umlauf des Fadens aufgrund der Luftreibung des Fadenballons langsamer als die schnelle Rotation der Spindel erfolgt, wird der Faden beim Aufwickeln verdrillt und versponnen.

Erfindungsgemäß weist/weisen der Rotor und/oder der Stator mindestens ein ringförmiges, koaxial zur Spindel angeordnetes Garnführungselement auf, wobei das Garnführungselement des Rotors und/oder das Garnführungselement des Stators derart angeordnet sind, den Luftspalt zu begrenzen. Die Garnführungselemente bilden somit ringförmige Begrenzungselemente, wobei der umlaufende Faden auf der Oberfläche eines oder beider Begrenzungselemente gleitet. Die dabei entstehende Reibung ist äußerst gering, sodass sehr hohe Drehzahlen der Spindel erzielt werden können. Zusammen mit der Luftreibung bestimmt die Reibung mit dem Garnführungselement die Relativgeschwindigkeit zwischen umlaufenden Faden und Spindeldrehung. Somit bestimmt die Oberflächenbeschaffenheit des ringförmigen Garnführungselements über die Reibung die Spinnqualität.

Anders als im Stand der Technik bilden die Garnführungselemente keine Öse oder ähnliche Vorrichtung, die mit dem Faden umläuft, sondern lediglich koaxial zur Spindelachse angeordnete Begrenzungselemente, die die Ausdehnung des Luftspalts definieren. Als Ergebnis ist es nicht mehr erforderlich, dass der Rotor mit dem Faden um die Spindelachse rotieren muss, auch wenn diese Rotation nach der vorliegenden Weiterbildung nicht zwingend ausgeschlossen ist. Aufgrund der unten beschriebenen magnetischen Levitation des Rotors ist eine Führung des Fadens ohne bewegte mechanische Teile möglich, da der schwebende Rotor berührungslos gelagert werden kann. Obwohl der Rotor, so wie weiter unten beschrieben, insbesondere drehfest gelagert werden kann, sodass keine Rotation des Rotors mehr stattfindet, wird dieser Begriff hier und im Folgenden synonym mit dem allgemeinen Begriff eines magnetfelderzeugenden koaxial zur Spindelachse angeordneten Elements verwendet. Der Begriff des Rotors bezieht sich somit mehr auf die berührungslose Lagerung als auf die Funktion als rotierendes Element. In der allgemeinen Weiterbildung kann zudem in Kauf genommen werden, dass der Rotor durch die Reibung des auf ihm gleitenden Fadens im Betrieb der Einrichtung allmählich in Rotation versetzt wird. Anders als zuvor kann die Einrichtung jedoch deutlich schneller hochgefahren werden, da der Faden aufgrund der geringen Reibung mit dem Garnführungselement des Rotors quasi instantan in Rotation versetzt werden kann.

Die Garnführungselemente sind derart ausgebildet, dass sie eine horizontale, d. h. in Umlaufrichtung gerichtete, Führung des aufzuwickelnde Fadens und optional eine vertikale, d. h. entlang der Spindelachse gerichtete, Führung des Fadens erleichtern. Dies erfolgt beispielsweise dadurch, dass die Garnführungselemente durch ihre Anordnung am Rotor und/oder Stator Umlenkelemente für den Faden bilden. Um ein Abreißen des Fadens im Betrieb zu vermeiden, können die Garnführungselemente mit einer geeignet glatten Oberfläche und insbesondere abgerundet ausgebildet werden. Beim Spinnprozess gleitet der Faden in Umlaufrichtung auf der glatten Oberfläche des oder der Garnführungselemente, die verhindern, dass sich der Faden in dem, insbesondere nicht rotationssymmetrisch ausgebildeten Rotor bzw. Stator verfängt. Die Garnführungselemente dienen somit dazu, den Faden beim Umlauf von eventuellen Unebenheiten und Kanten der Aufspul- und Dralleinrichtung fernzuhalten.

Rotor und Stator können zudem jeweils mehrere ringförmige Garnführungselemente aufweisen, solange der Luftspalt von wenigstens einem Garnführungselement des Rotors und/oder wenigstens einem Garnführungselement des Stators begrenzt wird. Da der Rotor und der Stator mit Ausnahme der Garnführungselemente nicht zwingend ringförmig ausgebildet sein müssen, bezieht sich ihre koaxiale Anordnung im Wesentlichen auf die genannten Garnführungselemente. Zudem können die weiter unten erwähnten Teilbereiche insbesondere entlang des Umfangs eines koaxialen Kreises um die Spindelachse angeordnet sein.

Der Rotor kann wie unten genauer beschrieben zumindest Teilbereiche mit einem permanentmagnetischen Material umfassen, die ein Magnetfeld erzeugen. Dies bedeutet, dass der Rotor zumindest bereichsweise magnetisiert ist oder Permanentmagneten aufweist. Andere Teilbereiche von Stator und Rotor können auch aus anderen, auch nichtmagnetischen Materialien bestehen. Dies gilt insbesondere für die Garnführungselemente. Um die Levitation des Rotors zu erleichtern, können insbesondere Materialien verwendet werden, die das Gewicht des Rotors reduzieren.

Damit sich ein supraleitender Zustand im Bereich des Stators einstellen kann, muss es dieser dem magnetischen Fluss des Rotors erlauben, in den Stator einzudringen, sowie eine Kühlvorrichtung zu seiner Kühlung vorhanden sein. Diese Statorkühleinrichtung zum Erzeugen tiefer Temperaturen, welche zum Einstellen des supraleitenden Zustandes des supraleitenden Materials nötig ist, ist so ausgeführt, dass sie die Temperatur in den supraleitenden Bereichen des Stators soweit absenken kann, dass diese unterhalb der Sprungtemperatur des verwendeten supraleitenden Materials liegt. In einer Ausführung der Erfindung kann die Kühleinrichtung in Form eines Badkryostaten, welcher bei Einsatz von Hochtemperatursupraleitern mit Sprungtemperaturen oberhalb 77K mit flüssigem Stickstoff gefüllt sein kann, ausgeführt sein, wobei in anderen Ausgestaltungen der Erfindung auch andere Kryostate, wie Verdampfungskryostate, bei denen eine Kühlung mit kaltem Gas erfolgt, oder Refrigeratorkryostate, bei denen keine Kryoflüssigkeit notwendig ist, verwendet werden. Diese können durch unterschiedliche Kombinationen von mehreren Kühleinrichtungen, welche sich durch die Ausnutzung ungleichartiger physikalischer Effekte der Kälteerzeugung unterscheiden, auch redundant verschaltet sein, um die Zuverlässigkeit des Systems zu erhöhen. Das supraleitende Material kann dabei insbesondere von einer geeigneten thermischen Isolierung zur Minimierung von Kühlverlusten umgeben bzw. ummantelt sein, die als Teil der Statorkühleinrichtung ausgebildet sein kann.

Da einerseits das Anbringen von Ösen oder Ähnlichem als Garnführungselemente an dem Rotor bei der erfindungsgemäßen Aufspul- und Dralleinrichtung entfällt und andererseits auch keine Rotation des Rotors mehr erforderlich ist, kann ein im Wesentlichen unwuchtfreier Rotor ausgebildet werden, der somit einfacher eigenstabil gelagert werden kann.

Der Rotor und der Stator sind derart ausgebildet und angeordnet, dass der Rotor aufgrund von magnetischer Levitation im Betrieb berührungslos lagerbar ist. Dies ist so zu verstehen, dass die Lagerung des Rotors nach Abkühlen der supraleitenden Bereiche des Stators frei schwebend, somit berührungslos ist. Unter Einhaltung eines optimalen Abstandes der sich gegenüberliegenden Begrenzungsflächen von Rotor und Stator und durch die Verankerung der Flussschläuche des eindringenden inhomogenen magnetischen Feldes des Rotors im Stator durch das Absenken der Temperatur des supraleitenden Materials unterhalb seiner Sprungtemperatur ist somit eine eigenstabile, passive Lagerung des Rotors sowohl ohne als auch mit Rotation des Rotors möglich. Dadurch können aufwändige Regelungs- bzw. Sensoreinheiten zur aktiven Lageregelung des Rotors entfallen. Durch den optimalen Abstand ist eine Verschleißfreiheit gegeben, woraus eine hohe Zuverlässigkeit und Unempfindlichkeit resultiert. Durch die berührungslose Lagerung des Rotors und den Wegfall des Rings des klassischen Ring-Läufer-Systems als maßgeblich produktivitätsbegrenzendes, da Reibungswärme erzeugendes Bauteil, können die Rotationsgeschwindigkeiten des Fadens und der Spindel erheblich gesteigert werden, was in Verbindung mit einer möglichen Vergrößerung des Kopsdurchmessers wiederum zu einer drastischen Produktivitätssteigerung führt.

Die sich einstellende eigenstabile, passive Lagerung des Rotors rührt aus dem Gleichgewicht der durch Positions- und Lageveränderung hervorgerufenen Rückstellkräfte und den Verankerungskräften der Flussschläuche im supraleitenden Material des Stators.

Erfindungsgemäß sind der Rotor und/oder der Stator derart ausgebildet, dass der Rotor bzgl. einer Drehung um die Spindelachse über das erzeugte Magnetfeld mit dem Stator verankert ist. Dies kann dadurch erreicht werden, dass das von dem Rotor erzeugte Magnetfeld nicht rotationssymmetrisch um die Spindelachse ist. Weiterhin können supraleitende Bereiche des Stators in Umfangsrichtung mit normalleitenden oder isolierenden Bereichen abwechseln und/oder die supraleitenden Bereiche können Fehlstellen aufweisen. Die supraleitenden Bereiche quantisieren das Magnetfeld in Form von Flussschläuchen, die an den Fehlstellen fixiert werden können. Aufgrund des resultierenden Gradienten des magnetischen Flusses ergibt sich eine Haltekraft. Eine Drehung des Rotors ist dann nur gegen diese Haltekraft möglich, die durch die geringe Reibung des umlaufenden Fadens auf der Oberfläche der Garnführungselemente nicht überwunden wird. Somit ist der Rotor nicht nur frei schwebend, sondern auch drehfest gelagert, sodass beim Anfahren der Einrichtung keine zusätzlichen Massen mehr beschleunigt werden müssen.

Der Rotor kann insbesondere einen oder mehrere Teilbereiche mit einem permanentmagnetischen Material aufweisen, die ein Magnetfeld erzeugen. Selbst mit einem einzigen magnetfelderzeugenden Teilbereich ist eine stabile Lagerung des Rotors möglich. Bei zwei oder mehr Teilbereichen mit permanentmagnetischem Material erhält das erzeugte Magnetfeld einen Multipolcharakter, der die drehfeste Lagerung erleichtert. Die Teilbereiche können beispielsweise in Form von Stab- oder Zylindermagneten ausgebildet sein, die in regelmäßigen Abständen an dem ringförmigen Garnführungselement angeordnet sind. Dabei kann der Polabstand vorzugsweise größer als die Breite des Luftspalts gewählt werden, um ein wirksames Eindringen des Magnetfeldes in die supraleitenden Bereiche des Stators zu garantieren. Dazwischen können nicht magnetische Segmente angeordnet sein, die besonders leicht ausgebildet sein können, um die Levitation zu erleichtern. Ebenso kann auf die zwischenliegenden Segmente vollständig verzichtet werden, um das Gewicht des Rotors weiter zu reduzieren. Im einfachsten Fall kann es sich bei dem Rotor um einen Führungsring für den Faden handeln, an dem zwei oder mehr Stab- oder Zylindermagnete angebracht sind.

Des Weiteren kann der Stator zwei oder mehr supraleitende Teilbereiche aufweisen, die in Umfangsrichtung der Spindel voneinander beabstandet sind. Der supraleitende Teil muss sich also insbesondere nicht über den gesamten Umfang erstrecken, wodurch die Statorkühlung deutlich kompakter und energiesparender ausfallen kann. Die supraleitenden Teilbereiche können einen Supraleiter Typ-ll als supraleitendes Material aufweisen. In einer Ausführungsform können dies keramische Hochtemperatursupraleiter aus der Gruppe der Seltenerd-Barium-Kupferoxide (SE) BaCuO, beispielsweise Yttrium-Barium-Kupferoxide (YBaCuO) oder der Gruppe der Bismut-Strontium-Kalzium-Kupferoxide (BiStCaCuO) sein. Es sind auch Ausführungen der Erfindung möglich, die ein supraleitendes Material in den Teilbereichen des Stators aufweisen, welches eine noch höhere Sprungtemperatur besitzt als die bereits genannten Gruppen. Dadurch können die Leistungsparameter der Kühleinrichtung reduziert werden, was zu einer gesteigerten Energieeffizienz der beschriebenen Aufspul- und Dralleinrichtung führt. Die supraleitenden Teilbereiche sind dabei stets von einer thermischen Isolierung umgeben, die der Minimierung von Kühlverlusten dient.

Zwischen den supraleitenden Teilbereichen können Segmente aus normalleitenden und/oder isolierenden Materialien angeordnet sein. Um Material zu sparen, kann auf diese Zwischensegmente jedoch auch vollständig verzichtet werden. Der Stator besteht in diesem Fall lediglich aus dem oder den ringförmigen Garnführungselementen und zwei oder mehr an diesen Garnführungselementen angeordneten supraleitenden Teilbereichen. Insbesondere können die supraleitenden Teilbereiche in regelmäßigen Abständen in der Peripherie, d. h. entlang eines Kreises um die Spindelachse, der Spindel angeordnet sein. Dies gestattet eine besonders stabile Lagerung des Rotors.

Der Rotor kann zu jedem supraleitenden Teilbereich des Stators einen entsprechend angeordneten Teilbereich mit einem permanentmagnetischen Material aufweisen. Dadurch stehen sich jeweils ein supraleitender Teilbereich des Stators und ein Teilbereich des Rotors gegenüber, wodurch eine besonders effektive Verankerung der magnetischen Flusslinien bewirkt werden kann. Die sich entsprechenden Teilbereiche können idealerweise gleiche oder vergleichbare Ausdehnungen in Umfangsrichtung aufweisen. Insbesondere können der Rotor und der Stator je genau drei Teilbereiche aufweisen. Die resultierende Drei-Punkt-Fixierung gestattet eine besonders stabile berührungslose Lagerung des Rotors während des gesamten Spinnvorgangs.

Gemäß einer Weiterbildung können der Rotor und der Stator koplanar angeordnet sein, wobei der Stator den Rotor umschließt und der Faden von oben durch den Luftspalt geführt wird. Die Begriffe "oben" und "unten" sind hier und im Folgenden bzgl. einer auf einer Aufstellfläche stehenden Ringspinn- oder Ringzwirnmaschine zu verstehen. Üblicherweise wird das Fasermaterial bzw. der Faden dem auf der Hülse aufgewickelten Kops von oben zugeführt, wobei sich aufgrund der schnellen Rotation des Fadens ein sogenannter Fadenballon ausbildet. Bei der koplanaren Anordnung liegt der Rotor in radialer Richtung innerhalb des Stators, wobei insbesondere das ringförmige Garnführungselement des Rotors innerhalb des ringförmigen Garnführungselements des Stators liegt. Von innen nach außen gesehen kann die Anordnung dann insbesondere wie folgt aussehen:
a) Segmente des Rotors mit permanentmagnetischem Material,
b) die Segmente umschließendes ringförmiges Garnführungselement des Rotors,
c) Luftspalt,
d) dem Garnführungselement des Rotors gegenüberliegendes und dieses umschließendes ringförmiges Garnführungselement des Stators und
e) supraleitende Segmente des Stators.

Eine solche Anordnung ist besonders kompakt und ermöglicht eine effiziente Kühlung der supraleitenden Bereiche. Der Faden kann auf besonders einfache Weise von oben durch den Luftspalt zwischen den ringförmigen Garnführungselementen geführt und unterhalb des Rotors auf den Kops aufgewickelt werden. Dabei wird der Faden im Allgemeinen auf der Oberfläche des Garnführungsrings des Rotors gleiten, sodass diese in vorteilhafter Weise besonders glatt ausgeführt werden kann. Zudem kann der Querschnitt des Garnführungsrings derart gestaltet werden, beispielsweise durch Abrundungen, dass ein Abreißen des Fadens an der Unterkante des Rings vermieden werden kann.

Gemäß einer alternativen Weiterbildung können der Rotor und der Stator mit einem axialen Abstand parallel zueinander angeordnet sein, wobei der Faden von außen durch den Luftspalt geführt wird. Die Begriffe "innen" und "außen" sind hier bzgl. der Spindelachse zu sehen. Der Rotor kann so angeordnet sein, dass er sich über oder unter dem Stator befindet, insoweit der axiale Abstand von Stator und Rotor klein genug ist, um es dem Magnetfeld des Rotors zu erlauben, in den supraleitenden Bereich des Stators einzudringen. Aufgrund des axialen Abstands zwischen Rotor und Stator ergibt sich zudem ein Luftspalt, durch den der Faden von außen geführt wird. Hierbei stehen sich die Garnführungselemente von Rotor und Stator zumindest teilweise in vertikaler Richtung, d. h. entlang der Spindelachse, gegenüber. Wie in der vorigen Weiterbildung können die Garnführungselemente auch hier mit abgerundeten Kantenprofilen ausgebildet werden, um ein Abreißen des Fadens zu verhindern. In einer anderen derartigen Weiterbildung können zwei Statoren so angeordnet sein, dass ihre sich axial gegenüberliegenden Begrenzungsflächen jeweils einer axialen Begrenzungsfläche des Rotors gegenüberliegen. Dadurch entstehen zwei ringförmige Luftspalte, wobei der Faden entweder durch den einen oder den anderen geführt werden kann. Die beschriebenen Weiterbildungen der Garnführungselemente sind in diesem Fall entsprechend anzuwenden.

Gemäß einer Weiterbildung kann zumindest der mit dem Faden in Kontakt kommende Teil der Oberfläche des Garnführungselements des Rotors und/oder Stators beschichtet sein. Insbesondere kann das gesamte Garnführungselement des Rotors und/oder des Stators beschichtet sein. Die Beschichtung kann dabei derart gewählt werden, dass sich eine gewünschte Reibung mit dem umlaufenden Faden bei der anvisierten Umlaufgeschwindigkeit einstellt, wodurch der Faden in der gewünschten Spinnqualität versponnen wird. Beispielsweise kann die Beschichtung einen Mittenrauwert Ra (µm) im Bereich von Ra=0,025 (Läppen) bis Ra=0,5 (Vorschleifen) nach DIN EN ISO 4287:2010-07 aufweisen.

Des Weiteren können die Garnführungselemente aus einem Kunststoff oder Leichtmetall bestehen oder einen Kunststoff und/oder Leichtmetall umfassen. Derartige Garnführungselemente können mit einem geringen Gewicht und gleichzeitig mit ausreichender Stabilität und Hitzebeständigkeit ausgebildet werden, sodass die Levitation des Rotors bei gleichzeitiger Verschleißarmut garantiert werden kann.

Gemäß einer Weiterbildung kann der Stator von einer Halteeinrichtung der Aufspul- und Dralleinrichtung gehalten werden, wobei diese sich so darstellt, dass ihre Position fixiert ist und sich die Spindel mit Kops relativ zum fixierten Stator axial, d. h. entlang der Spindelachse, bewegen kann, um das Garn gleichmäßig auf den Kops aufzuwickeln. In einer anderen Ausgestaltung der Erfindung ist dagegen die Spindel mit Kops fixiert und die Statorhalteeinrichtung ist mit einer Statorverfahreinrichtung verbunden, sodass sich die Aufspul- und Dralleinrichtung für Ringspinn- und Ringzwirnmaschinen relativ zu Spindel und Kops axial, d. h. entlang der Spindelachse, bewegen kann.

Bei der Ausgestaltung der Statorhalteeinrichtung ist ein radialer Abstand zwischen dem Kops und der inneren radialen Begrenzungsfläche des Stators oder Rotors, je nachdem welcher den kleineren Radius aufweist, einzuhalten. Um über den Zeitraum des Aufwickelns des Garns oder Zwirns auf den Kops den vom Fadenballon erzeugten Luftwiderstand gleich zu halten, ist es für die Ausführungsform mit bewegter Aufspul- und Dralleinrichtung möglich, den Fadenführer am oberen Ende des Fadenballons so zu gestalten, dass er ebenfalls von der Statorhalteeinrichtung gehalten wird oder direkt am Stator befestigt ist, sodass der Fadenführer zusammen mit der Aufspul- und Dralleinrichtung in axialer Richtung verfahren werden kann. Dadurch bleibt der Abstand des Fadenführers vom Rotor, und damit die Ausdehnung des Fadenballons, während des Aufwickelvorgangs konstant.

Die oben genannten Aufgaben werden auch durch ein Ringspinn- oder Ringzwirnverfahren gelöst, bei dem Fasermaterial verdrillt und anschließend aufgewickelt wird, wobei eine Aufspul- und Dralleinrichtung wie oben beschrieben bereitgestellt wird, wobei der Rotor durch einer Rotorhalteeinrichtung koaxial mit einem Abstand zum Stator gehalten wird, wobei die Temperatur des supraleitenden Materials des Stators unter die Sprungtemperatur des supraleitenden Materials abgesenkt wird, und wobei der Rotor anschließend durch die Rotorhalteeinrichtung freigegeben wird, bevor der eigentliche Spinn- oder Zwirnprozess beginnt, sobald der supraleitende Zustand des Stators erreicht wird.

Durch das anfängliche Halten des Rotors in einem konstruktionsbedingt vorgegebenen oder wählbaren axialen Abstand zum Stator wird das Anfahren der Maschine bei der vorgeschlagenen Lösung wesentlich erleichtert.

Bei dem genannten Ringspinn- oder Ringzwirnverfahren kann die Spindel mit einer Drehzahl um die Spindelachse angetrieben werden, bei der die Reibung des umlaufenden Fadens mit dem Garnführungselement des Rotors nicht zur Überwindung der drehfesten magnetischen Lagerung ausreicht. Anders ausgedrückt ist die durch die Verankerung der magnetischen Flusslinien bewirkte Rückstellkraft bzgl. einer Rotation des Rotors größer als die im Betrieb auftretenden Reibungskräfte des umlaufenden Fadens auf das Garnführungselement des Rotors.

Die beschriebenen Aufspul- und Dralleinrichtungen sowie Ringspinn- und Ringzwirnverfahren gestatten eine erhebliche Erhöhung der Drehzahl der Spindel bei gleichbleibender Qualität des gesponnenen Garns. Darüber hinaus kann die Ringspinn- oder Ringzwirnmaschine ohne zeitliche Verzögerung angefahren werden, sodass kein Ausschuss von Garn niedriger Qualität entsteht.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt eine schematische Darstellung einer Aufspul- und Dralleinrichtung für Ringspinnmaschinen gemäß einem ersten Ausführungsbeispiel der Erfindung, bei dem der Stator und der Rotor mit einem axialen Abstand parallel zueinander angeordnet sind.
Figur 2 zeigt eine schematische Darstellung einer Aufspul- und Dralleinrichtung für Ringspinnmaschinen gemäß einem zweiten Ausführungsbeispiel der Erfindung, bei dem der Stator und der Rotor koplanar angeordnet sind und der Stator den Rotor umschließt.
Figur 3 zeigt eine Draufsicht auf eine exemplarische Weiterbildung des Stators und des Rotors zur drehfesten, berührungslosen Lagerung des Rotors.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

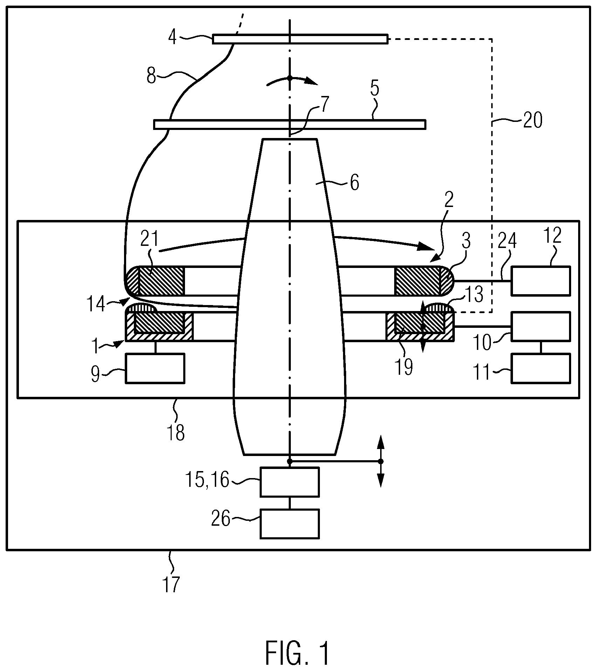

Bei dem Ausführungsbeispiel, das in Figur 1 in der Seitenansicht schematisch dargestellt ist, handelt es sich um den Ausschnitt einer Ringspinnmaschine 17, welche eine Aufspul- und Dralleinrichtung 18 gemäß der vorliegenden Erfindung umfasst. Der Stator 1, welcher mindestens ein supraleitendes Material 19 aufweist, ist koaxial zur Spindel bzw. Spindelachse 7 angeordnet und wird von der Statorkühleinrichtung 9 unter die Sprungtemperatur des supraleitenden Materials 19 abgekühlt. Der in dieser exemplarischen Weiterbildung unterhalb des Rotors 2 angeordnete Stator 1 wird von einer Statorhalteeinrichtung 10 gehalten, die lediglich schematisch angedeutet ist. Da magnetische Levitation jedoch auch hängend möglich ist, sind auch Weiterbildungen umfasst, bei denen der Stator oberhalb des Rotors angeordnet ist, sowie Weiterbildungen, bei denen ein Stator unterhalb des Rotors und ein weiterer Stator oberhalb des Rotors angeordnet sind.

Der Rotor 2 und der Stator 1 sind mit einem axialen Abstand und parallel zueinander angeordnet, sodass sie sich nicht berühren und das von einem permanentmagnetischen Material 21 des Rotors 2 erzeugte Magnetfeld in das supraleitende Material 19 des Stators 1 eindringen kann. Insbesondere sind der Rotor 2 und der Stator 1 derart ausgebildet, dass zwischen dem Rotor 2 und dem Stator 1 ein ringförmiger, koaxial zur Spindel 7 angeordneter Luftkanal 14 gebildet wird, in dem der aufzuwickelnde Faden 8 umlaufen kann. Wie in der Figur 1 gezeigt wird der Faden 8 hierzu von außen um den Rotor 2 und durch den Luftspalt 14 zum Kops 6 geführt. Der Stator 1 und der Rotor 2 umfassen dabei insbesondere keinerlei Elemente, die den Umlauf des Fadens 8 in dem Luftspalt behindern könnten.

Vielmehr weist der Rotor 2 in der hier gezeigten beispielhaften Ausführung ein ringförmiges, koaxial zur Spindel 7 angeordnetes Garnführungselement 3 auf, auf dessen Oberfläche der Faden 8 bei seinem Umlauf um die Spindelachse gleitet und/oder abrollt. Hierzu ist das Garnführungselement 3 in radialer Richtung außen am Rotor 2 angeordnet und mit einer glatten, abgerundeten Oberfläche derart versehen, dass der Faden 8 beim Führen über die Oberfläche nicht reißt. In der in Figur 1 gezeigten exemplarischen Weiterbildung weist auch der Stator 1 ein Garnführungselement 13 auf, welches ebenfalls ringförmig ausgebildet und koaxial zur Spindel 7 angeordnet ist. Der Faden 8 wird dabei in dem zwischen den Garnführungselementen 3 und 13 gebildeten Luftspalt 14 geführt. Es versteht sich, dass sowohl der Rotor 2 als auch der Stator 1 je nach Anordnung und Ausbildung weitere oder anders ausgebildete Garnführungselemente umfassen können, solange diese ringförmig und koaxial um die Spindelachse ausgebildet sind und ein zuverlässiges Führen des Fadens von außen durch den Luftspalt 14 zum Kops 6 garantieren. Die Anordnung der Garnführungselemente ist zudem der relativen Anordnung von Rotor 2 und Stator 1 anzupassen. Entscheidend ist, dass die Garnführungselemente das freie Umlaufen des Fadens 8 ermöglichen und somit insbesondere nicht als geschlossener Läufer ausgebildet sind, der mit dem Faden um die Spindelachse umlaufen muss. Dadurch ist es möglich, den frei schwebenden Rotor 2 magnetisch in dem Stator 1 zu verankern, sodass er im Betrieb der Einrichtung feststehend und berührungslos gelagert ist. Da nunmehr keine Massen mehr beschleunigt werden müssen, kann die Einrichtung ohne Verzögerung angefahren werden.

Zur Inbetriebnahme und Außerbetriebnahme der Aufspul- und Dralleinrichtung 18 wird der Rotor 2 durch eine Rotorhalteeinrichtung 12 koaxial mit einem Abstand zum Stator 1 gehalten, die Temperatur des Stators 1 wird unter die Sprungtemperatur des supraleitenden Materials 19 abgesenkt und anschließend wird der Rotor 2 durch die Rotorhalteeinrichtung 12 freigegeben. Hierzu kann die schematisch dargestellte mechanische Verbindung 24 im Betrieb zurückgezogen werden.

Das Garn 8 läuft durch den Fadenführer 4, weiter durch den Balloneinengungsring 5 sowie von außen über das Garnführungselement 3 des Rotors 2, um auf den Kops 6 aufgewickelt zu werden, da sich aufgrund der Reibung des umlaufenden Fadens 8 auf der Oberfläche des Garnführungselements 3 und durch die Luftreibung des sich bildenden Fadenballons eine Relativgeschwindigkeit zwischen der von der Spindelhalteeinrichtung 15 gehaltenen und von der Spindeldreheinrichtung 16 in Rotation versetzten Spindel 7 in Bezug auf die Umlaufgeschwindigkeit des Fadens 8 einstellt. Die Relativgeschwindigkeit kann durch die Oberflächenbeschaffenheit des, insbesondere beschichteten, Garnführungselements 3 beeinflusst werden, wodurch die Spinnqualität des erzeugten Garns entsprechend eingestellt werden kann.

Zum Aufwickeln des Garns 8 auf den Kops 6 wird in einer Ausführung der Erfindung die Statorhalteeinrichtung 10 mittels der Statorverfahreinrichtung 11 entlang der Spindelachse verfahren, wobei die Fadenführung 4 und optional der Balloneinengungsring 5 über eine optionale starre Verbindung 20 (schematisch angedeutet) mit bewegt werden können, die Spindel 7 aber ihre Position relativ zur Ringspinnmaschine 17 nicht verändert. In einer anderen Ausführung der Erfindung bleibt die Position der Aufspul- und Dralleinrichtung 18 relativ zur Ringspinnmaschine 17 gleich, während die Spindel 7 mit dem Kops 6 mittels der Spindelverfahreinrichtung 26 entlang der Spindelachse verfahren wird.

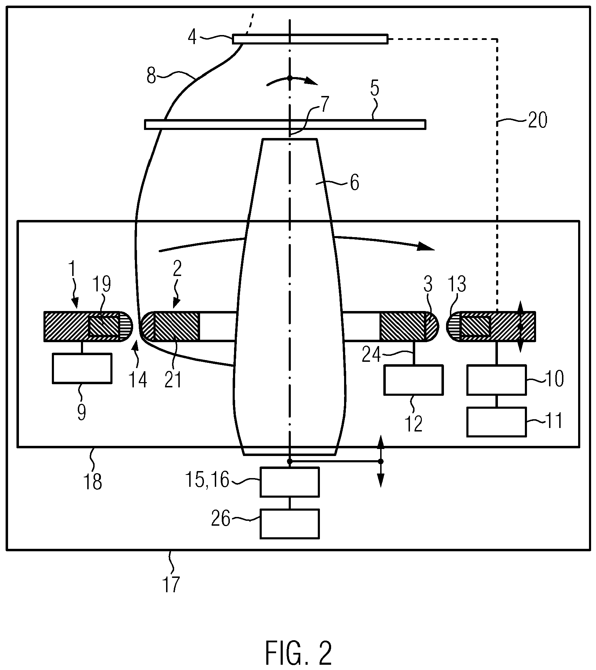

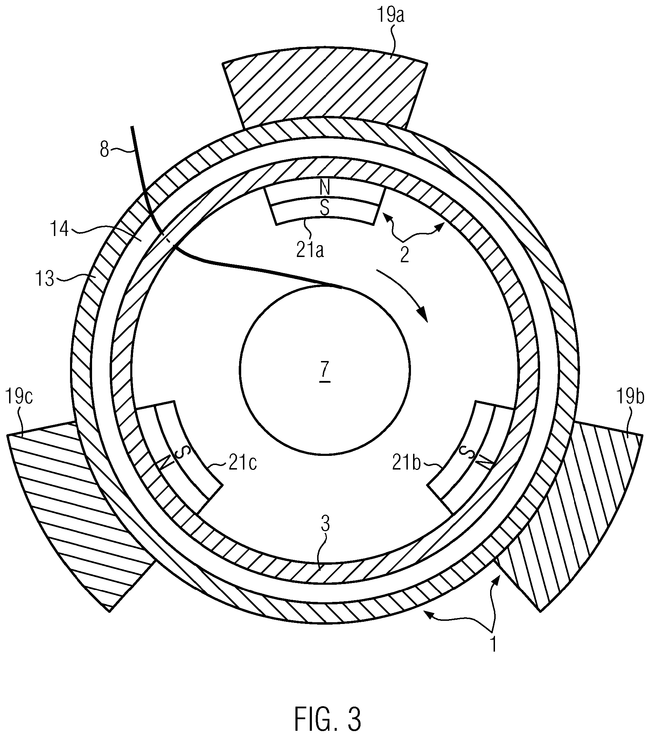

In Figur 2 ist eine alternative Weiterbildung der Aufspul- und Dralleinrichtung 18 einer Ringspinnmaschine 17 in einer schematischen Seitenansicht gezeigt. Wie schon in der vorherigen Ausführungsform ist der Stator 1, welcher mindestens ein supraleitendes Material 19 aufweist, koaxial zur Spindel bzw. Spindelachse 7 angeordnet und wird von der Statorkühleinrichtung 9 unter die Sprungtemperatur des supraleitenden Materials 19 abgekühlt. Wie in Figur 3 genauer dargestellt, impliziert die koaxiale Anordnung des Stators 1 bzw. des Rotors 2 jedoch nicht, dass der Stator 1 bzw. der Rotor 2 ringförmig ausgebildet sein müssen. Lediglich der radiale Abstand der weiter unten beschriebenen Segmente des Stators 1 bzw. Rotors 2 von der Spindelachse muss gleich sein. In der in der Figur 2 gezeigten Weiterbildung sind der Rotor 2 und der Stator 1 koplanar angeordnet, wobei der Stator den Rotor umschließt, sodass sie sich nicht berühren und das von dem permanentmagnetischen Material 21 des Rotors 2 erzeugte Magnetfeld in das supraleitende Material 19 des Stators 1 eindringen kann. Da der Stator 1 von der Statorhalteeinrichtung 10 gehalten wird und der Faden 8 durch den ringförmigen Luftspalt 14 umläuft, muss der Rotor 2 innerhalb des Stators 1 angeordnet sein.

In der gezeigten Weiterbildung weist der Rotor 2 ein ringförmiges, koaxial zur Spindel 7 angeordnetes Garnführungselement 3 auf, über das der Faden 8 von oben durch den Luftspalt 14 zum Kops 6 geführt wird. Auch hier ist das Garnführungselement 3 radial am Außenumfang des Rotors 2 angeordnet und mit einer glatten, abgerundeten Oberfläche ausgebildet, sodass der Faden 8 ohne Zerreißen mit hoher Geschwindigkeit über die Oberfläche des Garnführungselements 3 geführt werden kann. Zusätzlich weist der Stator 1 ein radial auf seinem Innenumfang angeordnetes ringförmiges Garnführungselement 13 auf, welches zusammen mit dem Garnführungselement 3 den gebildeten ringförmigen Luftspalt 14 begrenzt.

Zur Inbetriebnahme und Außerbetriebnahme der Aufspul- und Dralleinrichtung 18 wird der Rotor 2 durch eine Rotorhalteeinrichtung 12 koaxial mit einem Abstand zum Stator 1 gehalten, die Temperatur des Stators 1 wird unter die Sprungtemperatur des supraleitenden Materials 19 abgesenkt und anschließend wird der Rotor 2 durch Zurückziehen der mechanischen Verbindung 24 der Rotorhalteeinrichtung 12 freigegeben.

Das Garn 8 läuft durch den Fadenführer 4, weiter durch den Balloneinengungsring 5 sowie von oben durch den zwischen Stator 1 und Rotor 2 gebildeten ringförmigen Luftspalt 14 , um auf den Kops 6 aufgewickelt zu werden, wobei sich aufgrund der Reibung des auf der Oberfläche des Garnführungselements 3 umlaufenden Fadens 8 und der Luftreibung des Fadenballons eine Relativgeschwindigkeit zwischen der von der Spindelhalteeinrichtung 15 gehaltenen und von der Spindeldreheinrichtung 16 in Rotation versetzten Spindel 7 in Bezug auf die Umlaufgeschwindigkeit des Fadens 8 einstellt, welche die Spinnqualität bestimmt. Erneut kann durch geeignete Wahl der Oberflächenbeschaffenheit des Garnführungselements 3 eine gewünschte Spinnqualität eingestellt werden.

Zum Aufwickeln des Garns 8 auf den Kops 6 wird in einer Ausführung der Erfindung die Statorhalteeinrichtung 10 mittels der Statorverfahreinrichtung 11 entlang der Spindelachse verfahren, wobei die Fadenführung 4 und optional der Balloneinengungsring 5 über eine optionale starre Verbindung 20 mit bewegt werden können, während die Spindel 7 ihre Position relativ zur Ringspinnmaschine 17 nicht verändert. In einer anderen Ausführung der Erfindung bleibt die Position der Aufspul- und Dralleinrichtung 18 relativ zur Ringspinnmaschine 17 unverändert, während die Spindel 7 mit dem Kops 6 mittels der Spindelverfahreinrichtung 26 entlang der Spindelachse verfahren wird.

Eine spezielle Weiterbildung des Stators und des Rotors zur drehfesten, berührungslosen Lagerung des Rotors ist in der Figur 3 exemplarisch gezeigt. Während die Garnführungselemente 3 und 13 ringförmig ausgebildet sind, sind sowohl die permanentmagnetischen Bereiche 21 des Rotors 2 als auch die supraleitenden Bereiche 19 des Stators 1 nur segmentweise ausgebildet. In der dargestellten, nicht limitierenden Weiterbildung umfasst der Rotor 2 drei in gleichmäßigen Abständen entlang des Innenumfangs des Garnführungselements 3 angeordnete Teilbereiche 21a-c mit einem permanentmagnetischen Material, welche beispielsweise wie dargestellt als Stab- oder Zylindermagnete ausgebildet sein können. Die Magnete sind dabei an dem Garnführungselement 3 befestigt und tragen dieses im Betrieb. Alternativ kann das Garnführungselement 3 selbst die permanentmagnetischen Teilbereiche, beispielsweise als magnetisierte Segmente eines Metallrings, umfassen. Bei der erstgenannten Ausführung kann der Rotor 2 besonders leicht ausgebildet werden, indem das Garnführungselement 3 beispielsweise aus Kunststoff oder einem Leichtmetall und mit geringer Dicke ausgebildet wird. Dadurch lässt sich die magnetische Levitation schon mit geringer Feldstärke erreichen.

Entsprechend zum Rotor 2 weist der Stator 1 drei in gleichmäßigen Abständen entlang des Außenumfangs des Garnführungselements 13 angeordnete supraleitende Teilbereiche 19a-c auf, die bzgl. ihrer Ausdehnung und ihrer Anordnung derart ausgebildet sein können, dass sie den permanentmagnetischen Teilbereichen 21a-c des Rotors 2 genau gegenüberstehen. Die supraleitenden Teilbereiche 19a-c können dabei von der Statorhalteeinrichtung oder der Statorkühleinrichtung gehalten werden, während sie ihrerseits das Garnführungselement 13 halten. Letzteres kann unter Umständen auch entfallen. Die dargestellte Anordnung mit jeweils drei Teilbereichen gestattet eine stabile berührungslose Lagerung des Rotors, die zudem aufgrund der Verankerung der magnetischen Flusslinien in den supraleitenden Teilbereichen 19a-c drehfest ist. Der Faden 8 kann wie in der Figur 3 gezeigt von oben durch den Luftspalt 14 zwischen den beiden Garnführungselementen 3 und 13 geführt werden und in diesem umlaufen. Es besteht somit keine Notwendigkeit mehr, den Rotor 2 beim Anfahren der Ringspinnmaschine zu beschleunigen und beim Abfahren abzubremsen. Aufgrund der geringen Reibung des umlaufenden Fadens 8 können zudem sehr hohe Drehzahlen der Spindel 7 erzielt werden, wodurch die Produktivität der Ringspinnmaschine gesteigert werden kann. Da der Rotor 2 - trotz des Namens - nicht mehr rotiert, besteht zudem kein Verletzungsrisiko mehr für das Bedienpersonal.

## Patentansprüche

1. Aufspul- und Dralleinrichtung einer Ringspinn- oder Ringzwirnmaschine, umfassend:
mindestens einen Stator (1), der mindestens ein supraleitendes Material (19) und eine Statorkühlung (9) umfasst,
mindestens einen magnetfelderzeugenden Rotor (2), und
eine drehbare Spindel (7),
wobei der Rotor (2) und der Stator (1) koaxial zur Spindel (7) angeordnet sind; wobei der Rotor (2) und der Stator (1) derart ausgebildet sind, dass zwischen dem Rotor (2) und dem Stator (1) ein ringförmiger, koaxial zur Spindel (7) angeordneter Luftspalt (14) gebildet wird, in dem der aufzuwickelnde Faden (8) umlaufen kann;
wobei der Rotor (2) und/oder der Stator (1) mindestens ein ringförmiges, koaxial zur Spindel (7) angeordnetes Garnführungselement (3, 13), über dessen Oberfläche der aufzuwickelnde Faden gleiten kann, aufweisen,
wobei das Garnführungselement (3) des Rotors (2) und/oder das Garnführungselement (13) des Stators (1) den Luftspalt (14) begrenzen;
und wobei der Rotor (2) weiterhin derart ausgebildet ist, dass der Rotor (2) bzgl. einer Drehung um die Spindelachse über das erzeugte Magnetfeld mit dem Stator (1) verankert ist.

2. Aufspul- und Dralleinrichtung nach Anspruch 1, wobei der Rotor (2) einen oder mehrere Teilbereiche (21a-c) mit einem permanentmagnetischen Material aufweist, die ein Magnetfeld erzeugen.

3. Aufspul- und Dralleinrichtung nach Anspruch 1 oder 2, wobei der Stator (1) zwei oder mehr supraleitende Teilbereiche (19a-c) aufweist, die in Umfangsrichtung der Spindel (7) voneinander beabstandet sind.

4. Aufspul- und Dralleinrichtung nach Anspruch 3, wobei die supraleitenden Teilbereiche (19a-c) in regelmäßigen Abständen in der Peripherie der Spindel (7) angeordnet sind.

5. Aufspul- und Dralleinrichtung nach Anspruch 3 oder 4, wobei der Rotor (2) zu jedem supraleitenden Teilbereich (19a-c) des Stators (1) einen entsprechend angeordneten Teilbereich (21a-c) mit einem permanentmagnetischen Material aufweist.

6. Aufspul- und Dralleinrichtung nach Anspruch 5, wobei der Rotor (2) und der Stator (1) je genau drei Teilbereiche (19a-c, 21a-c) aufweisen.

7. Aufspul- und Dralleinrichtung nach einem der vorhergehenden Ansprüche, wobei der Rotor (2) und der Stator (1) koplanar angeordnet sind, der Stator (1) den Rotor (2) umschließt und der Faden (8) von oben durch den Luftspalt (14) geführt wird.

8. Aufspul- und Dralleinrichtung nach einem der Ansprüche 1 bis 6, wobei der Rotor (2) und der Stator (1) mit einem axialen Abstand parallel zueinander angeordnet sind und der Faden (8) von außen durch den Luftspalt (14) geführt wird.

9. Aufspul- und Dralleinrichtung nach einem der vorhergehenden Ansprüche, wobei zumindest der mit dem Faden (8) in Kontakt kommende Teil der Oberfläche des Garnführungselements (3, 13) des Rotors (2) und/oder Stators (1) beschichtet ist.

10. Aufspul- und Dralleinrichtung nach einem der vorhergehenden Ansprüche, wobei die Garnführungselemente (3, 13) aus Kunststoff oder Leichtmetall sind oder Kunststoff oder Leichtmetall umfassen.

11. Ringspinn- oder Ringzwirnverfahren, bei dem Fasermaterial verdrillt und anschließend aufgewickelt wird,
**dadurch gekennzeichnet, dass**
eine Aufspul- und Dralleinrichtung (18) nach einem der Ansprüche 1 bis 10 bereitgestellt wird, der Rotor (2) durch eine Rotorhalteeinrichtung (12) koaxial mit einem Abstand zum Stator (1) gehalten wird,
die Temperatur des supraleitenden Materials (19) des Stators (1) unter die Sprungtemperatur des supraleitenden Materials (19) abgesenkt wird, und
der Rotor (2) durch die Rotorhalteeinrichtung (12) freigegeben wird.

12. Ringspinn- oder Ringzwirnverfahren nach Anspruch 11, wobei die Spindel (7) mit einer Drehzahl um die Spindelachse rotiert wird, bei der die Reibung des umlaufenden Fadens (8) mit den Garnführungselementen (3, 13) nicht zur Überwindung der drehfesten magnetischen Lagerung ausreicht.

## Claims

1. Winding and twisting device of a ring spinning or ring twisting machine, comprising:
at least one stator (1) that comprises at least one superconducting material (19) and a stator cooling device (9),
at least one rotor (2) that generates a magnetic field, and
a rotatable spindle (7),
wherein the rotor (2) and the stator (1) are arranged co-axially to the spindle (7);
wherein the rotor (2) and the stator (1) are configured such that a ring-shaped air gap (14), which is arranged co-axially to the spindle (7) and in which the thread (8) to be wound up can circulate, is formed between the rotor (2) and the stator (1);
wherein the rotor (2) and/or the stator (1) have at least one ring-shaped yarn guiding element (3, 13) that is arranged co-axially to the spindle (7),
wherein the yarn guiding element (3) of the rotor (2) and/or the yarn guiding element (13) of the stator (1) delimit the air gap (14);
and wherein the rotor (2) is further configured such that the rotor (2) is pinned to the stator (1) through the generated magnetic field in relation to a rotation around the spindle axis.

2. Winding and twisting device according to claim 1, wherein the rotor (2) has one or several subsection(s) (21a-c) with a permanent-magnetic material that generates a magnetic field.

3. Winding and twisting device according to claim 1 or 2, wherein the stator (1) has two or more superconducting subsections (19a-c) that are spaced from one another in the circumferential direction of the spindle (7).

4. Winding and twisting device according to claim 3, wherein the superconducting subsections (19a-c) are arranged in regular intervals in the periphery of the spindle (7).

5. Winding and twisting device according to claim 3 or 4, wherein the rotor (2) has a respectively arranged subsection (21a-c) with a permanent-magnetic material for each superconducting subsection (19a-c) of the stator (1).

6. Winding and twisting device according to claim 5, wherein the rotor (2) and the stator (1) each have exactly three subsections (19a-c, 21a-c).

7. Winding and twisting device according to one of the preceding claims, wherein the rotor (2) and the stator (1) are arranged in a co-planar way, the stator (1) encloses the rotor (2) and the thread (8) is guided from above through the air gap (14).

8. Winding and twisting device according to one of the claims 1 to 6, wherein the rotor (2) and the stator (1) are arranged in parallel and at an axial distance to one another and wherein the thread (8) is guided from the outside through the air gap (14).

9. Winding and twisting device according to one of the preceding claims, wherein at least the part of the surface of the yarn guiding element (3, 13) of the rotor (2) and/or the stator (1) that comes in contact with the thread (8) is coated.

10. Winding and twisting device according to one of the preceding claims, wherein the yarn guiding elements (3, 13) are made of plastic or light metal or comprise plastic or light metal.

11. Ring spinning or ring twisting method in which the fiber material is twisted and subsequently wound up,
**characterized in that**
a winding and twisting device (18) according to one of the Claims 1 to 10 is provided,
the rotor (2) is held co-axially at a distance to the stator (1) by a rotor holding device (12),
the temperature of the superconducting material (19) of the stator (1) is reduced below the transition temperature of the superconducting material (19), and
the rotor (2) is released by the rotor holding device (12).

12. Ring spinning or ring twisting method according to Claim 11, wherein the spindle (7) is rotated with a speed around the spindle axis in the process of which the friction of the circulating thread (8) with the yarn guiding elements (3, 13) is not sufficient to overcome the torque-proof magnetic support.

## Revendications

1. Dispositif d'embobinage et de torsion d'un métier à filer ou à retordre à anneaux, comprenant :
au moins un stator (1) qui comporte au moins un matériau supraconducteur (19) et un dispositif de refroidissement de stator (9),
au moins un rotor produisant un champ magnétique (2), et
un fuseau rotatif (7),
dans lequel le rotor (2) et le stator (1) sont agencés de manière coaxiale avec le fuseau (7) ;
dans lequel le rotor (2) et le stator (1) sont conçus de telle sorte qu'est constituée entre le rotor (2) et le stator (1) une lame d'air (14) annulaire coaxiale avec le fuseau (7) dans laquelle peut passer le fil à enrouler (8) ;
dans lequel le rotor (2) et/ou le stator (1) comporte au moins un élément de guidage de fil (3, 13) annulaire coaxial avec le fuseau (7), sur la surface duquel peut glisser le fil à enrouler ;
dans lequel l'élément de guidage de fil (3) du rotor (2) et/ou l'élément de guidage de fil (13) du stator (1) délimitent la lame d'air (14) ;
et dans lequel le rotor (2) est en outre conçu de telle sorte que le rotor (2) est ancré avec le stator (1) dans le champ magnétique produit lors d'une rotation autour de l'axe du fuseau.

2. Dispositif d'embobinage et de torsion selon la revendication 1, dans lequel le rotor (2) comporte une ou plusieurs sections (21a-c) avec un matériau magnétique permanent, qui produisent un champ magnétique.

3. Dispositif d'embobinage et de torsion selon la revendication 1 ou 2, dans lequel le stator (1) comporte deux ou plusieurs sections supraconductrices (19a-c) qui sont espacées en direction circonférentielle du fuseau (7).

4. Dispositif d'embobinage et de torsion selon la revendication 3, dans lequel les sections supraconductrices (19a-c) sont espacées régulièrement sur la périphérie du fuseau (7).

5. Dispositif d'embobinage et de torsion selon la revendication 3 ou 4, dans lequel le rotor (2) comporte pour chaque section supracondutrice (19a-c) du stator (1) une section (21a-c) agencée correspondante avec un matériau magnétique permanent.

6. Dispositif d'embobinage et de torsion selon la revendication 5, dans lequel le rotor (2) et le stator (1) comportent exactement trois sections (19a-c, 21a-c).

7. Dispositif d'embobinage et de torsion selon l'une des revendications précédentes, dans lequel le rotor (2) et le stator (1) sont agencés de manière coplanaire, le stator (1) entoure le rotor (2), et le fil (8) est engagé depuis le haut dans la lame d'air (14).

8. Dispositif d'embobinage et de torsion selon l'une des revendications 1 à 6, dans lequel le rotor (2) et le stator (1) sont agencés parallèlement avec un espacement axial entre eux, et le fil (8) est engagé depuis l'extérieur dans la lame d'air (14).

9. Dispositif d'embobinage et de torsion selon l'une des revendications précédentes, dans lequel au moins la partie en contact avec le fil (8) de la surface de l'élément de guidage de fil (3, 13) du rotor (2) et/ou du stator (1) est revêtue.

10. Dispositif d'embobinage et de torsion selon l'une des revendications précédentes, dans lequel les éléments de guidage de fil (3, 13) sont en plastique ou en alliage léger, ou comportent du plastique ou un alliage léger.

11. Procédé de filage ou de torsion à anneaux permettant de filer un matériau fibreux et ensuite de l'embobiner,
**caractérisé en ce que**
un dispositif d'embobinage et de torsion (18) selon l'une des revendications 1 à 10 est pourvu,
le rotor (2) est maintenu coaxial avec le stator (1) et à une certaine distance de celui-ci par un dispositif de maintien de rotor (12),
la température du matériau supraconducteur (19) du stator (1) est abaissée sous la température critique du matériau supraconducteur (19), et
le rotor (2) est libéré par le dispositif de maintien de rotor (12).

12. Procédé de filage ou de torsion à anneaux selon la revendication 11, dans lequel le fuseau (7) est mis en rotation autour de l'axe du fuseau à une vitesse de rotation où la friction du fil tournant (8) avec les éléments de guidage de fil (3, 13) ne dépasse pas la force de résistance du support magnétique bloqué en rotation.
